(19) **Europäisches Patentamt / European Patent Office / Office européen des brevets**

(11) **EP 2 917 988 B1**

(12) **FASCICULE DE BREVET EUROPEEN**

(45) Date de publication et mention
de la délivrance du brevet:
**21.02.2018 Bulletin 2018/08**

(21) Numéro de dépôt: **13786267.8**

(22) Date de dépôt: **05.11.2013**

(51) Int Cl.:
**H02H 9/04** *(2006.01)*

(86) Numéro de dépôt international:
**PCT/EP2013/073085**

(87) Numéro de publication internationale:
**WO 2014/072300 (15.05.2014 Gazette 2014/20)**

(54) **COMPOSANT DE PROTECTION CONTRE LA FOUDRE**

BLITZSCHUTZKOMPONENTE

LIGHTNING PROTECTION COMPONENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.11.2012 FR 1260536**

(43) Date de publication de la demande:
**16.09.2015 Bulletin 2015/38**

(73) Titulaire: **Safran Electronics & Defense
92100 Boulogne-Billancourt (FR)**

(72) Inventeurs:
• **BAILLY, Eric
F-92100 Boulogne Billancourt (FR)**
• **RIOU, Jean-Christophe
F-92100 Boulogne Billancourt (FR)**

(74) Mandataire: **Lavialle, Bruno François Stéphane et
al
Cabinet Boettcher
16, rue Médéric
75017 Paris (FR)**

(56) Documents cités:
| | |
|---|---|
| **EP-A2- 0 472 405** | **WO-A1-2007/006021** |
| **GB-A- 1 301 034** | **US-A- 3 600 634** |
| **US-A- 3 858 089** | **US-A- 5 321 575** |

**Description**

La présente invention concerne un composant de protection contre la foudre, destiné à être interposé entre un équipement électronique susceptible d'être détérioré par un signal de foudre et une ligne susceptible d'être touché par la foudre et de transmettre un signal de foudre vers l'équipement électronique.

Il existe de nombreux composants de protection contre la foudre comprenant des diodes Zener de puissance, des diodes de type Transorb ou TVS... dimensionnées pour supporter des tensions et des courants de l'ordre de ceux engendrés lors d'un impact de foudre. Une telle diode est destinée à être montée entre la ligne susceptible d'être frappée par la foudre et un circuit dissipateur d'énergie, généralement une masse. Quand la foudre frappe la ligne, la diode devient passante et conduit le signal de foudre vers un circuit dissipateur, généralement une masse.

Il est apparu que de tels composants de protection altéraient les performances de certains équipements électroniques disposés en aval du composant. Tel est le cas par exemple lorsque la ligne en question relie des capteurs à un circuit de mesure. Dans ce cas, du fait des caractéristiques des composants, des courants de fuite sont induits à une température relativement haute. Selon les performances métrologiques attendues en aval, ces courants de fuite peuvent induire des erreurs en tension qui vont dégrader la mesure. Ceci est notamment le cas des circuits de mesure différentiels mettant en oeuvre par exemple un amplificateur d'instrumentation ou une fonction faisant la différence analogique de deux fonctions.

Les documents US-A-3858089 et US-A-5321575 (D2) décrivent des dispositifs de protection contre les surtensions électriques comportant des relais REED pour détourner le signal de foudre vers la terre.

Un but de l'invention est de proposer un composant de protection contre la foudre qui n'altère pas de manière préjudiciable les performances de l'équipement qui lui est raccordé et ceci de manière générique quel que soit le type d'entrées :

- analogique différentielle ou non, en liaison avec des capteurs ou des sources de tension ou de courants quelconques
- numérique, en contact avec des signaux TTL, CMOS, LVDS...
- bus différentiels de type 1553, CAN, VAN...
- signaux de puissance.

A cet effet, on prévoit, selon l'invention, un composant de protection contre la foudre selon la revendication 1.

L'interrupteur de dérivation dans son état ouvert ne laisse pas passer de courant de fuite susceptible de perturber le fonctionnement de l'équipement raccordé au composant tout en assurant l'évacuation du signal de foudre lorsqu'il est dans son état fermé. La protection de l'équipement est ainsi assurée sans perturber le fonctionnement de l'équipement hors foudroiement.

De préférence, le composant comprend un circuit de détection d'un état de fonctionnement du circuit de dérivation, le circuit de détection comprenant des moyens de vérification d'une fermeture correcte de l'interrupteur et d'un écoulement des charges dans l'interrupteur.

De préférence, le circuit de détection est interrogeable par le système et aussi par l'équipement qui est protégé à tout moment. L'état de fonctionnement d'un tel circuit de dérivation est facile à détecter du fait de la présence de l'interrupteur de dérivation dont il suffit de vérifier la fermeture et la conduction.

Avantageusement alors, le dispositif de détection comprend une liaison d'entrée/sortie destinée à être reliée à l'équipement à protéger.

L'équipement peut alors commander la vérification de l'état de fonctionnement et obtenir une information représentative de cet état.

Selon un mode de réalisation particulier du circuit de dérivation, le circuit de dérivation comprend une ligne de commande qui s'étend entre une entrée secondaire destinée à être reliée à une source de basse tension et une entrée de commande de l'interrupteur de dérivation et qui est pourvue d'un interrupteur de commande ayant une entrée de commande à haute tension reliée à la ligne directe.

La fermeture de l'interrupteur de commande est alors assurée directement par le signal de foudre, entraînant alors la fermeture de l'interrupteur de dérivation. Il en résulte une relative simplicité du circuit de dérivation.

Avantageusement, le gaz est un gaz ionisable qui sous une tension suffisante devient conducteur et contribue à accélérer le déplacement du contact mobile. Le gaz ionisé est de préférence maintenu dans des conditions, plus particulièrement de pression, telles que la tension suffisante correspond à un tiers environ de la tension du signal de foudre.

Selon un mode de réalisation du composant, l'interrupteur comprend deux électrodes disposées dans une enceinte contenant un gaz ionisable et séparées l'une de l'autre par ledit gaz de telle manière que l'interrupteur soit fermé sous l'effet d'un claquage résultant d'une mise sous tension supérieure à un seuil prédéterminé compris entre une tension d'alimentation nominale de l'équipement et une tension de foudre.

Sous l'effet de la tension, le gaz se transforme en un plasma conducteur permettant la conduction des charges entre les deux électrodes. L'écartement entre les électrodes étant fixe et la pression du gaz ionisable contrôlable, ce type d'interrupteur forme une barrière physique procurant une protection sans fuite électrique tant que la tension est inférieure au seuil prédéterminé. Ce type d'interrupteur est particulièrement avantageux car il peut être placé sur tout type de liaison électrique tel que bus numérique, bus de puissance, bus différentiel (de type 1553 ou autre), ou des entrées analogiques. Le réglage de la tension d'éclatement est obtenu par le simple dimensionnement de la cavité définie par les électrodes grâce à l'utilisation de silicium et des moyens d'usinage associés (type DRIE, sacrificiel, gravure chimique...) et à la pression du gaz. La tension d'éclatement peut être relativement faible, jusqu'à 1 Volt par exemple. En parallèle l'interrupteur peut former un condensateur ayant une très petite capacité (pF) et une relativement petite taille tout en étant très stable en tension et en température, qui peut être placée au plus proche des composants électroniques, voire directement en entrée de ceux-ci sur le même substrat, en assurant le découplage desdits composants. La durée de vie de l'interrupteur est relativement grande devant celle des éclateurs du commerce car les cavités sont formées à partir d'une structure verticale qui permet un écoulement en volume des charges et non en surface.

De préférence, les électrodes ont des surfaces en regard présentant des ondulations.

La géométrie en ondulation des électrodes formant les murs de la cavité (géométrie par exemple issue d'un usinage de type DRIE) permettra de multiples points de décharges entre les deux électrodes, points qui vont varier au gré des arrachements de matière qui vont intervenir au cours du temps.

Avantageusement, le composant comporte plusieurs interrupteurs montés en série et/ou en parallèle.

Les décharges de foudre sont écoulées par le biais d'un réseau d'interrupteurs, éventuellement reliés par des résistances. Ceci permet de répartir sur le courant à écouler sur une pluralité d'interrupteurs et donc de diminuer les contraintes auxquelles chaque interrupteur est soumis.

D'autres caractéristiques et avantages de l'invention ressortiront à la lecture de la description qui suit de modes de réalisation particuliers non limitatifs de l'invention.

Il sera fait référence aux dessins annexés, parmi lesquels :

- la figure 1 est une vue schématique d'un composant conforme à l'invention,
- la figure 2 est un schéma électrique de ce composant,
- la figure 3 est une vue schématique, en coupe selon un plan perpendiculaire aux électrodes, d'un des interrupteurs utilisés dans le composant,
- la figure 4 est une vue schématique, en section selon la ligne IV-IV de la figure 3, de cet interrupteur,
- la figure 5 est une vue schématique en coupe d'une variante de réalisation des interrupteurs utilisés dans le composant.

En référence aux figures, le composant de protection contre la foudre, conforme à l'invention, généralement désigné en 1, est ici monté entre un capteur S et un équipement de traitement T de signaux électriques analogiques provenant du capteur S. Le capteur S, connu en lui-même, est par exemple un capteur de position d'un élément mobile et l'équipement de traitement T, également connu en lui-même, comprend par exemple un amplificateur d'instrumentation et des moyens pour exploiter les signaux électriques en provenance du capteur C par exemple pour commander un moteur de déplacement de l'élément mobile. Il ne s'agit là que d'un exemple et d'autres applications sont bien entendu possibles.

Le composant 1 est un composant monté en surface (ou CMS) agencé sous la forme de circuits intégrés assemblés en 3D (c'est-à-dire que les composants sont placés et connectés verticalement et horizontalement) et d'éléments électroniques passifs, montés sur un substrat et incorporés dans un boîtier (cette architecture est couramment nommée SIP de l'anglais « system in package »). Le SIP en question peut aussi intégrer d'autres circuits intégrés et composants passifs... liés à une autre fonction que la présente fonction de protection foudre.

Le composant 1 comprend ici une entrée principale 2.1 reliée au capteur S et susceptible de transmettre un signal de foudre, une entrée secondaire 2.2 reliée à une source de basse tension u, une sortie principale 3.1 reliée à l'équipement de traitement T à protéger du signal de foudre et une sortie dérivée 3.2 reliée à un circuit dissipateur connu en lui-même, ici une masse M. Les entrées 2.1, 2.2 et sorties 3.1, 3.2 sont pourvues de contact sous forme de billes organisées en matrice (BGA) sur une surface extérieure du substrat du composant 1. Le substrat du composant 1 intègre les commutateurs de protection contre la foudre.

Le composant 1 comprend en outre une ligne directe 4 reliant l'entrée principale 2.1 à la sortie principale 3.1 et un circuit de dérivation, généralement désigné en 5, qui est monté entre la ligne directe 4 et la sortie dérivée 3.2.

Le circuit de dérivation 5 comprend un interrupteur de dérivation 6 qui est relié à la ligne directe 4 et à la sortie dérivée 3.2 et qui a un état ouvert dans lequel la sortie dérivée 3.2 est isolée de la ligne directe 4 et un état fermé de conduction du signal de foudre depuis la ligne directe 4 vers la sortie dérivée 3.2.

Le circuit de dérivation 5 comprend une ligne de commande comportant un interrupteur de commande 7 reliant l'entrée secondaire 2.2 à une entrée de commande de l'interrupteur de dérivation 6 via un circuit de temporisation, généralement désigné en 8, agencé pour fermer l'interrupteur de dérivation pendant un temps prédéterminé. A noter que dans une version avancée, le circuit de temporisation 8 peut devenir réglable par le système ou l'équipement à protéger.

L'interrupteur de commande 7 a une entrée de commande à haute tension reliée à la ligne directe 4.

Les formes d'ondes du signal de foudre prises en charge par cette protection sont celles couramment rencontrées en aéronautique soit (suivant la norme D0160 section 22 et 23) :

○ forme d'onde n°3 / impulsion unique : sinus amorti de fréquence F=10MHz,

■ la tension de circuit ouvert est de 1500 V,
■ le courant de court-circuit est de 60 A.

○ forme d'onde n°4 / impulsion unique : durée de montée Trise = 6,4 $\mu$s et durée de descente Tfall = 69 ps,

■ la tension de circuit ouvert est de 750 V,
■ le courant de court-circuit est de 150 A.

○ forme d'onde n°5A / impulsion unique : durée de montée Trise = 40 $\mu$s et durée de descente T Tfall = 120 $\mu$s,

■ la tension de circuit ouvert est de 750 V,
■ le courant de court-circuit est de 150 A.

A propos des tests de foudre, il convient de noter que :

• le générateur de foudre permettant de tester la protection est réglé sur une charge pour être capable de générer par exemple 60A sous 1500V selon un sinus amorti à 10 MHZ (forme d'onde n° 3). Ce signal est ensuite envoyé sur la protection et suivant l'impédance de celui-ci, la tension ou le courant va dominer l'échange.
• les trois formes d'onde n°3, 4 et 5A ne sont pas présentes en même temps. Généralement, on a une coexistence de deux formes d'ondes lors d'une agression foudre (formes d'onde n°3 et 5A ou formes d'onde n°4 et 5A par exemple).

L'interrupteur de commande 7 est agencé de telle manière que l'interrupteur de commande 7 se ferme lorsque l'entrée de commande est soumise à une tension intermédiaire entre la tension des signaux fournis nominalement par le capteur S (par exemple moins d'un Volt) et la tension d'un signal de foudre (par exemple 750 Volts). A noter que l'interrupteur 7 peut se déclencher sur une perturbation positive ou négative de la foudre. La tension provoquant la fermeture de l'interrupteur de commande 7 est par exemple de 200 Volts. Le circuit de temporisation 8 comprend une diode 9 montée en série entre l'interrupteur de commande 7 et l'entrée de commande de l'interrupteur de dérivation 6, ainsi qu'un condensateur 10 et une résistance 11 montés en parallèle l'un de l'autre entre la cathode de la diode 9 et la masse M. Le circuit de temporisation 8 est dimensionné pour maintenir normalement la fermeture de l'interrupteur de dérivation 6 pendant une durée d'une seconde de manière à s'assurer que l'ensemble des charges du signal de foudre ont pu s'écouler vers la masse M via l'interrupteur de dérivation 6.

Les interrupteurs 6, 7 sont ici des microsystèmes électromécaniques enfermés dans une cavité avec un gaz à pression constante et contrôlée. De préférence, le gaz en question est un gaz susceptible de se ioniser à la tension de 200 Volts précitée. Les interrupteurs 6 et 7 peuvent être constitués d'une multitude d'interrupteurs de type MEMS placés en parallèle et/ou en série les uns aux autres et pilotés par la même commande. Chacun de ces interrupteurs peut être fabriqué en silicium ou tout autre alliage cristallin ou non de celui-ci (ex : SiC, Si3N4...). Dans une version plus économique, les interrupteurs peuvent aussi être fabriqués en polymère à cristaux liquides (« liquid cristal polymer » ou LCP).

Chaque microsystème électromécanique comprend un contact mobile 20 formant l'entrée de commande et deux électrodes fixes 21, 22 écartées l'une de l'autre et reliées à un des tronçons de la ligne à interrompre, à savoir la ligne de commande pour l'interrupteur de commande 7 et la ligne de dérivation reliant la ligne directe 4 à la sortie dérivée 3.2 pour l'interrupteur de dérivation 6. Le contact mobile 20 s'étend en regard des électrodes fixes 21 et 22 et est porté par une poutre déformable agencée pour se déplacer, depuis une position écartée du contact mobile vis-à-vis des électrodes jusqu'à une position d'application du contact mobile 20 contre les électrodes, sous l'effet d'une force électrostatique engendrée par une tension électrique présente dans l'entrée de commande, soit la tension de 200 Volts pour l'interrupteur de commande 7 et la tension u pour l'interrupteur de dérivation 6. Le contact mobile est de préférence en or épais (épaisseur supérieur ou égale à 1$\mu$m) sur du nickel (épaisseur supérieur ou égale à 3$\mu$m).

On comprend qu'en l'absence d'un signal de foudre sur la ligne directe 4, les interrupteurs 6, 7 sont ouverts et les signaux en provenance du capteur S sont acheminés via la ligne directe 4 à l'équipement de traitement T. Lorsqu'un signal de foudre est transmis à la ligne directe 4, l'interrupteur de commande 7 se ferme et entraîne la fermeture de l'interrupteur de dérivation 6, fermeture maintenue pendant une seconde environ. Le signal de foudre est alors évacué par la ligne de dérivation jusqu'à la masse M. Il est avantageux que le circuit de commande de l'interrupteur de dérivation 6 soit le plus rapide possible devant la période du signal de foudre (soit environ 0,1 ps) et il importe que la résistance en entrée de l'équipement de traitement T soit grande devant la résistance de la ligne de dérivation (le rapport est par exemple de 1 000 000). Dans le cas des interrupteurs 6 et 7, la technologie de fabrication et les matériaux retenus doivent donc permettre une prise en compte de l'agression résultant du signal de foudre beaucoup plus rapidement que le signal de foudre lui-même (au moins 100 fois plus rapide que la période d'agression). Ce besoin est donc en phase avec les caractéristiques des interrupteurs décrits ici.

Le composant 1 de l'invention comprend en outre un circuit, schématisé en 12, de détection d'un état de fonctionnement du circuit de dérivation 5.

Le circuit de détection 12 comprend des moyens, connus en eux-mêmes, de vérification d'une fermeture correcte des interrupteurs 6, 7 et d'un écoulement des charges dans les interrupteurs 6, 7 dans leur état fermé à haute tension et basse tension respectivement. Le dispositif de détection comprend une liaison d'entrée / sortie 13 reliée à l'équipement de traitement T à protéger.

Le circuit de détection 12 est mis en fonctionnement à la suite d'une requête envoyée au circuit de détection 12 par l'équipement de traitement T via la liaison d'entrée / sortie 13. Le circuit de détection 12 est agencé pour s'isoler alors de l'équipement de traitement T et procéder aux vérifications de fermeture et de conduction. Ces vérifications effectuées, le circuit de détection 12 se reconnecte à l'équipement de traitement T et envoie à ce dernier un signal représentatif de l'état de fonctionnement des interrupteurs 6, 7.

Le circuit de détection 12 comprend ici :

- un générateur de courant continu jusqu'à 1A,
- un générateur de haute tension, et
- un convertisseur alternatif / continu pour mesurer la présence de la tension u et la valeur de la résistance de l'interrupteur 6.

Le générateur de tension permet d'actionner lors de son contrôle l'interrupteur 7. La vérification de bon fonctionnement se fait en vérifiant que la tension u est bien mesurée en aval de l'interrupteur 7 lorsqu'il est fermé. Ce générateur réglable est conçu simplement à partir de transistors, de diodes et de composants passifs. Il va permettre de mesurer la variation du seuil de déclenchement de l'interrupteur 7 en fonction du temps, ce qui permettra au système de contrôler l'état de santé de celui-ci.

Le générateur de courant va permettre de faire une mesure de la résistance à l'état passant de l'interrupteur 6 (Ron). L'isolement à l'état ouvert de celui-ci sera vérifié par le biais d'une fraction du générateur haute tension décrit précédemment.

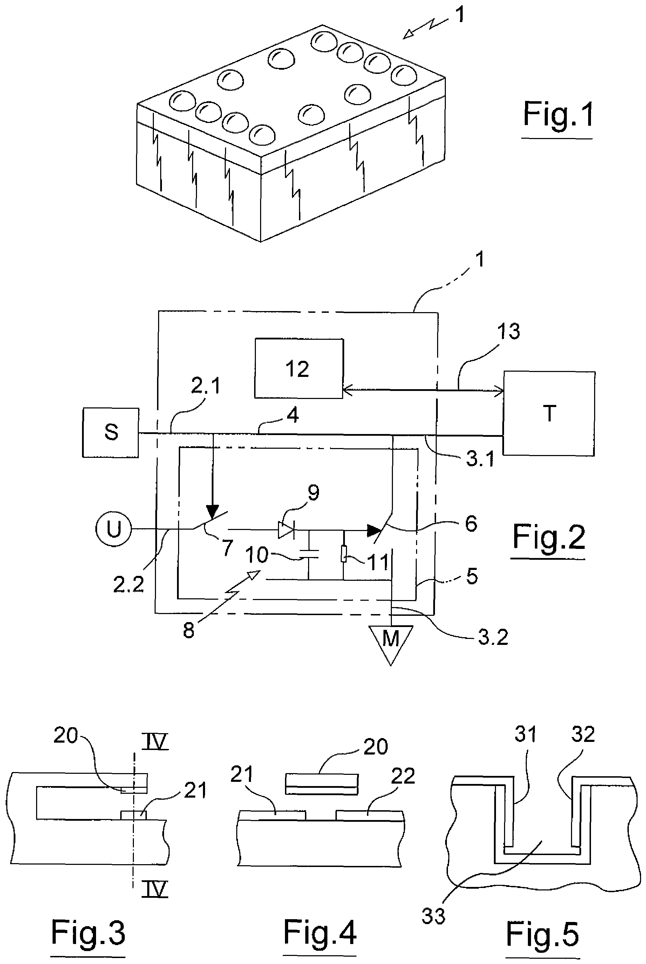

En variante, il est possible d'utiliser d'autres types d'interrupteur, plus particulièrement pour les interrupteurs 7, et notamment, comme représenté à la figure 5, un interrupteur comprenant deux électrodes 31, 32 disposées dans une enceinte hermétique et séparées l'une de l'autre par un mélange de gaz contenu dans l'enceinte et remplissant un espace libre 33 s'étendant entre les électrodes 31, 32. Les électrodes 31, 32 sont reliées chacune à un tronçon de la ligne à interrompre de telle manière que l'interrupteur soit fermé sous l'effet d'un claquage (avalanche) résultant d'une mise sous tension supérieure à un seuil prédéterminé compris entre une tension d'alimentation nominale de l'équipement et une tension de foudre. Le seuil prédéterminé est ici égale à un tiers de la tension attendue du signal de foudre. Au moins une des électrodes a de préférence un facies spécifique et contrôlé en rugosité, et une finition comprenant notamment du nickel épais (épaisseur supérieure ou égale à 3 $\mu$m), de l'or (épaisseur supérieure ou égale à 1 $\mu$m). Les électrodes 31, 32 ont ici des surfaces en regard présentant des ondulations.

Le gaz est ici un gaz qui peut être de l'argon, de l'air ou toute autre composition de ceux-ci.

Dans le cas de l'interrupteur 7, le dimensionnement de la haute tension de déclenchement s'exprime de la manière suivante :

$$Vb = [b * p * d]/[Ln (a * p * d) - Ln (Ln (1 + 1/\delta se))]$$

avec Vb : barrière de potentiel,
a, b : constantes dépendant du gaz,
P : pression de gaz dans la cavité,

d : distances inter-électrodes,
δse : coefficient d'émission électrique (nature des surfaces).

A partir des courbes de Paschen, on constate qu'il est possible d'atteindre des niveaux de claquages assez bas pour un produit P * d de l'ordre de 5E$^{-3}$ à 1E$^{-4}$ bars.cm, ce qui est compatible de la technologie des MEMS. Par ailleurs, les niveaux minimums peuvent évoluer de 326 V dans l'air à 195 V dans l'argon et 95 V dans l'argon dopé sodium. Enfin la technologie des MEMS permet de modifier les états de surfaces des électrodes afin de moduler à la baisse les tensions de claquage.

Dans un isolant classique solide, le simple fait de claquer entraîne rapidement l'endommagement de celui-ci (décharges partielles) et à terme une rupture totale de la barrière. L'avantage avec les gaz est que le phénomène d'avalanche est totalement réversible à volonté, avec la reformation de la barrière (auto-régénération) lorsque la tension décroît sous le seuil d'ionisation du gaz.

Dans cette variante aussi, il est intéressant de disposer plusieurs interrupteurs montés en série et en parallèle pour répartir le courant du signal de foudre sur tous ces interrupteurs et limiter ainsi les contraintes subies par chacun des interrupteurs.

Bien entendu, l'invention n'est pas limitée aux modes de réalisation décrits mais englobe toute variante entrant dans le champ de l'invention telle que définie par les revendications.

En particulier, le composant peut comprendre des interrupteurs de types différents ou des interrupteurs de même type.

Le circuit de commande peut être différent de celui décrit.

Des moyens de pilotage de l'interrupteur de dérivation autres que l'interrupteur de commande sont envisageables.

## Revendications

1. Composant de protection contre la foudre, comprenant au moins une entrée principale (2.1) susceptible de transmettre un signal de foudre, au moins une sortie principale (3.1) destinée à être reliée à un équipement (T) à protéger du signal de foudre, une sortie dérivée (3.2) destinée à être reliée à un circuit dissipateur (M), une ligne directe (4) reliant l'entrée principale à la sortie principale, un circuit de dérivation (5) qui est monté entre la ligne directe et la sortie dérivée et qui est pourvu d'au moins un interrupteur de dérivation (6) ayant un état ouvert dans lequel la sortie dérivée est isolée de la ligne directe et un état fermé de conduction du signal de foudre depuis la ligne directe vers la sortie dérivée, **caractérisé en ce que** au moins l'un des interrupteurs (6, 7) est un microsystème électromécanique enfermé dans une cavité avec un gaz à pression constante et contrôlée, le microsystème électromécanique comprenant un contact mobile (20) formant l'entrée de commande et deux électrodes fixes (21, 22), le contact mobile étant agencé pour se déplacer, depuis une position écartée des électrodes jusqu'à une position au contact des électrodes, sous l'effet d'une force électrostatique engendrée par une tension électrique présente dans l'entrée de commande.

2. Composant selon la revendication 1, comprenant un circuit de détection (12) d'un état de fonctionnement du circuit de dérivation (5), le circuit de détection comprenant des moyens de vérification d'une fermeture correcte de l'interrupteur de dérivation (6) et d'un écoulement des charges dans l'interrupteur de dérivation (6) .

3. Composant selon la revendication 1, dans lequel le circuit de détection (12) comprend une liaison d'entrée/sortie (13) destinée à être reliée à l'équipement (T) à protéger.

4. Composant selon la revendication 1, dans lequel le circuit de dérivation (5) comprend une ligne de commande qui s'étend entre une entrée secondaire (2.2) destinée à être reliée à une source de basse tension (u) et une entrée de commande de l'interrupteur de dérivation (6) et qui est pourvue d'un interrupteur de commande (7) ayant une entrée de commande à haute tension reliée à la ligne directe (4).

5. Composant selon la revendication 4, dans lequel l'interrupteur de commande (7) est relié à l'entrée de commande de l'interrupteur de dérivation (6) via un circuit de temporisation (8) agencé pour fermer l'interrupteur de dérivation pendant un temps prédéterminé.

6. Composant selon la revendication 1, dans lequel le gaz est un gaz ionisable sous une tension inférieure à une tension du signal de foudre.

**7.** Composant selon la revendication 1, dans lequel l'interrupteur (6, 7) comprend deux électrodes disposées dans une enceinte hermétique contenant un gaz ionisable et séparées l'une de l'autre par ledit gaz de telle manière que l'interrupteur soit fermé sous l'effet d'un claquage résultant d'une mise sous tension supérieure à un seuil prédéterminé compris entre une tension d'alimentation nominale de l'équipement et une tension de foudre.

**8.** Composant selon la revendication 7, dans lequel le gaz comprend de l'argon, de l'air ou toute autre composition de ceux-ci.

**9.** Composant selon la revendication 7, dans lequel les électrodes ont des surfaces en regard présentant des ondulations.

**10.** Composant selon l'une quelconque des revendications précédentes, comportant plusieurs interrupteurs montés en série et/ou en parallèle.

**Patentansprüche**

**1.** Blitzschutzkomponente, umfassend mindestens einen Haupteingang (2.1), der dazu geeignet ist, ein Blitzsignal zu übertragen, mindestens einen Hauptausgang (3.1), der dazu bestimmt ist, mit einem vor dem Blitzsignal zu schützenden Gerät (T) verbunden zu werden, einen Abzweigungsausgang (3.2), der dazu bestimmt ist, mit einer Dissipationsschaltung (M) verbunden zu werden, eine direkte Leitung (4), die den Haupteingang mit dem Hauptausgang verbindet, eine Abzweigungsschaltung (5), die zwischen der direkten Leitung und dem Abzweigungsausgang geschaltet und die mit mindestens einem Abzweigungsschalter (6) versehen ist, der einen offenen Zustand hat, in dem der Abzweigungsausgang von der direkten Leitung isoliert ist, sowie einen geschlossenen Zustand zur Leitung des Blitzsignals von der direkten Leitung zum Abzweigungsausgang, **dadurch gekennzeichnet, dass** mindestens einer der Schalter (6, 7) ein elektromechanisches Mikrosystem ist, das in einem Hohlraum mit einem Gas mit konstantem und kontrolliertem Druck eingeschlossen ist, wobei das elektromechanische Mikrosystem einen beweglichen Kontakt (20) umfasst, der den Steuereingang bildet, sowie zwei ortsfeste Elektroden (21, 22), wobei der bewegliche Kontakt so ausgebildet ist, dass er sich unter der Wirkung einer elektrostatischen Kraft, die von einer in dem Steuereingang vorhandenen elektrischen Spannung erzeugt wird, von einer von den Elektroden entfernten Position bis in eine Position in Kontakt mit den Elektroden verschiebt.

**2.** Komponente nach Anspruch 1, umfassend eine Erfassungsschaltung (12) zum Erfassen eines Betriebszustandes der Abzweigungsschaltung (5), wobei die Erfassungsschaltung Mittel zur Verifikation eines korrekten Schließens des Abzweigungsschalters (6) und eines Fließens von Ladungen in dem Abzweigungsschalter (6) umfasst.

**3.** Komponente nach Anspruch 1, bei der die Erfassungsschaltung (12) eine Eingangs-/Ausgangs-Verbindung (13) umfasst, die dazu bestimmt ist, mit dem zu schützenden Gerät (T) verbunden zu werden.

**4.** Komponente nach Anspruch 1, bei der die Abzweigungsschaltung (5) eine Steuerleitung umfasst, die sich zwischen einem Sekundäreingang (2.2), der dazu bestimmt ist, mit einer Niedrigspannungsquelle (u) verbunden zu werden, und einem Steuereingang des Abzweigungsschalters (6) erstreckt, und die mit einem Steuerschalter (7) versehen ist, der einen Hochspannungssteuereingang hat, der mit der direkten Leitung (4) verbunden ist.

**5.** Komponente nach Anspruch 4, bei der der Steuerschalter (7) mit dem Steuereingang des Abzweigungsschalters (6) über eine Verzögerungsschaltung (8) verbunden ist, die so ausgebildet ist, dass sie den Abzweigungsschalter für eine vorgegebene Zeit schließt.

**6.** Komponente nach Anspruch 1, bei der das Gas ein Gas ist, das unter einer Spannung ionisierbar ist, die kleiner als eine Spannung des Blitzsignals ist.

**7.** Komponente nach Anspruch 1, bei der der Schalter (6, 7) zwei Elektroden umfasst, die in einer hermetisch abgeschlossenen Einfassung angeordnet sind, die ein ionisierbares Gas umfasst, und die voneinander durch das Gas derart getrennt sind, dass der Schalter unter der Wirkung eines Durchschlags geschlossen wird, der aus einem Anlegen einer Spannung resultiert, die über einem vorgegebenen Schwellwert liegt, der zwischen einer nominalen Versorgungsspannung des Geräts und einer Blitzspannung liegt.

**8.** Komponente nach Anspruch 7, bei der das Gas Argon, Luft oder jede andere Zusammensetzung derselben umfasst.

9. Komponente nach Anspruch 7, bei der die Elektroden gegenüberliegende Oberflächen haben, die Welligkeiten aufweisen.

10. Komponente nach einem der vorhergehenden Ansprüche, umfassend mehrere Schalter, die in Reihe und/oder parallel geschaltet sind.

**Claims**

1. A lightning protection component, comprising at least one main input (2.1) capable of transmitting a lightning signal, at least one main output (3.1) for connection to equipment (T) to be protected from the lightning signal, a branch output (3.2) for connection to a dissipation circuit (M), a direct line (4) connecting the main input to the main output, and a branch circuit (5) which is fitted between the direct line and the branch output and which is provided with at least one branch switch (6) having an open state in which the branch output is isolated from the direct line and a closed state in which the lightning signal is conducted from the direct line toward the branch output, **characterized in that** at least one of the switches (6, 7) being a microelectromechanical system enclosed in a cavity with a gas at constant controlled pressure, the microelectromechanical system comprising a moving contact (20) forming the control input and two fixed electrodes (21, 22), the moving contact being arranged so as to be moved from a position separated from the electrodes to a position in contact with the electrodes, under the action of an electrostatic force generated by a voltage present in the control input.

2. The component as claimed in claim 1, comprising a detection circuit (12) for detecting an operating state of the branch circuit (5), the detection circuit comprising means for verifying the correct closure of the branch switch (6) and the flow of charges in the branch switch (6).

3. The component as claimed in claim 1, wherein the detection circuit (12) comprises an input/output link (13) for connection to the equipment (T) to be protected.

4. The component as claimed in claim 1, wherein the branch circuit (5) comprises a control line, which runs between a secondary input (2.2), for connection to a source of low voltage (u), and a control input of the branch switch (6), and which is provided with a control switch (7) having a high-voltage control input connected to the direct line (4).

5. The component as claimed in claim 4, wherein the control switch (7) is connected to the control input of the branch switch (6) via a delay circuit (8) arranged to close the branch switch for a predetermined period.

6. The component as claimed in claim 1, wherein the gas is a gas that can be ionized by a voltage smaller than the voltage of the lightning signal.

7. The component as claimed in claim 1, wherein the switch (6, 7) comprises two electrodes positioned in a sealed enclosure containing an ionizable gas and separated from one another by said gas, in such a way that the switch is closed by a breakdown caused by the application of a voltage above a predetermined threshold, which lies between a nominal supply voltage of the equipment and a lightning voltage.

8. The component as claimed in claim 7, wherein the gas comprises argon, air or any combination of these.

9. The component as claimed in claim 7, wherein the facing surfaces of the electrodes are corrugated.

10. The component as claimed in any one of the preceding claims, comprising a plurality of switches mounted in series and/or in parallel.

Fig.1

Fig.2

Fig.3

Fig.4

Fig.5

**EP 2 917 988 B1**

**Documents brevets cités dans la description**

- US 3858089 A

- US 5321575 A